(19) Europäisches Patentamt
European Patent Office
Office européen des brevets

(11) **EP 3 527 455 B1**

(12) **EUROPEAN PATENT SPECIFICATION**

(45) Date of publication and mention
of the grant of the patent:
**23.12.2020 Bulletin 2020/52**

(21) Application number: **19157569.5**

(22) Date of filing: **15.02.2019**

(51) Int Cl.:
*B60L 50/15* (2019.01)     *B60L 50/16* (2019.01)
*B60L 50/60* (2019.01)     *B60W 50/10* (2012.01)
*B60K 6/48* (2007.10)      *B60W 10/08* (2006.01)
*B60W 10/26* (2006.01)     *B60W 30/18* (2012.01)
*B60W 20/14* (2016.01)     *B60L 7/18* (2006.01)
*B60L 15/20* (2006.01)     *B60L 58/12* (2019.01)
*B60L 58/16* (2019.01)

(54) **METHOD AND DEVICE FOR CONTROLLING THE PROPULSION OF A VEHICLE INCLUDING A PROPULSION ELECTRIC MOTOGENERATOR**

VERFAHREN UND VORRICHTUNG ZUM STEUERN DES ANTRIEBS EINES FAHRZEUGS MIT EINEM ELEKTRISCHEN MOTORGENERATOR MIT ANTRIEB

PROCÉDÉ ET DISPOSITIF POUR COMMANDER LA PROPULSION D'UN VÉHICULE COMPRENANT UN MOTEUR-GÉNÉRATEUR À PROPULSION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2018 IT 201800002779**

(43) Date of publication of application:
**21.08.2019 Bulletin 2019/34**

(73) Proprietor: **Iveco S.p.A.**
**10156 Torino (IT)**

(72) Inventors:
• **CANEPA, Alessio**
**16156 Genova (IT)**
• **AIMO BOOT, Marco**
**10072 Caselle Torinese (TO) (IT)**
• **BERNARDINI, Alessandro**
**16123 Genova (IT)**

(74) Representative: **Bongiovanni, Simone et al**
**Studio Torta S.p.A.**
**Via Viotti, 9**
**10121 Torino (IT)**

(56) References cited:
**EP-A1- 2 907 686**     **US-A1- 2002 183 161**
**US-A1- 2006 287 798**  **US-A1- 2009 298 641**
**US-A1- 2012 130 572**  **US-A1- 2016 059 703**
**US-A1- 2016 129 809**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 527 455 B1

**Description**

Technical field of the invention

The invention relates to the field of methods and devices for controlling the propulsion of a thermal/electric hybrid or merely hybrid vehicle, as disclosed for instance in documents US2002/183161 A1, US2012/130572 A1, US2006287798 A1, EP2907686 A1, US2016/059703 A1, YUS2009/298641 A1 or US2016129809 A1.

State of the art

"Parallel" hybrid vehicles are provided with an internal combustion engine and with an electric motor generator, which are connected to the transmission of the vehicle. They can use either one or both of them for driving the vehicle.
The electric motor generator is powered by batteries, which can be charged by means of an external charger, or by the motor generator itself, when it acts likes an engine brake rather than being used to accelerate the vehicle. When the electric motor generator is used for engine braking, it usually carries out a so-called "regenerative braking". It exploits the inertia of the vehicle in order to charge the vehicle batteries when the accelerator pedal is completely or partially released, even without acting upon the brake pedal.
Besides acceleration and regenerative braking, there is an accelerator partial release condition, usually defined as "coasting", in which the vehicle slows down and the electric motor delivers neither a driving torque nor a resisting torque.

Summary of the invention

The present invention relates to a method and a relating device for controlling the propulsion of a parallel hybrid vehicle, which are designed to improve the driving comfort, without jeopardizing the vehicle battery charging process.
The idea on which the invention is based is that of modulating, depending on the actual momentum of the vehicle, the curve describing the torque delivered/absorbed by the electric motor generator as a function of the position of the accelerator pedal.
As it is known, said momentum is the product of the speed and of the mass of the vehicle.
After having acquired a total mass of the vehicle and having imposed a vehicle constant speed value, the aforesaid curve is a straight line in an accelerator pedal pressing interval [0 - 100], which intersects the ordinate axis in a point called "known term". This point, according to the invention, is can move along the ordinate axis depending on the momentum of the vehicle.
For each possible position of this point along the ordinate axis, a straight line is identified, which joins it to the point corresponding to the maximum power deliverable by electric motor and to the maximum inclination of the accelerator pedal.
According to a preferred variant of the invention, the momentums of the vehicle are discretized through thresholds identifying a predetermined number of known terms.
Since the speed of the vehicle is acquired instant by instant and contributes to the variation of the aforesaid torque, then, when the vehicle is decelerating, as it slows down, the delivered/absorbed torque varies, even if the accelerator pedal is kept in a constant position, shifting between the aforesaid straight lines corresponding to the aforesaid momentum thresholds, which identify the aforesaid points of intersection on the ordinate axis.
The speed thresholds can be chosen so as to be as close as one wants.
This function is preferably defined, according to the invention, both during the deceleration phase and during the acceleration phase of the vehicle.
The invention finds application in electric-drive, in series hybrid, parallel hybrid, multimodal, power slip or fuel cell vehicles.
The claims describe preferred embodiments of the invention, thus forming an integral part of the description.

Brief description of the figures

Further objects and advantages of the invention will be best understood upon perusal of the following detailed description of an embodiment thereof (and of relating variants) with reference to the accompanying drawings merely showing non-limiting examples, wherein:

- figure 1 indicates a torque curve relating to a first strategy for controlling the electric motor generator according to the invention;
- figure 2 shows a development of a parameter implemented for the analytic calculation of the torque function according to the strategy of figure 1.

Detailed description of embodiments

Hereinafter the method according to the invention is described, said method allowing for a continuous control of the torque delivered/absorbed by the electric motor generator.

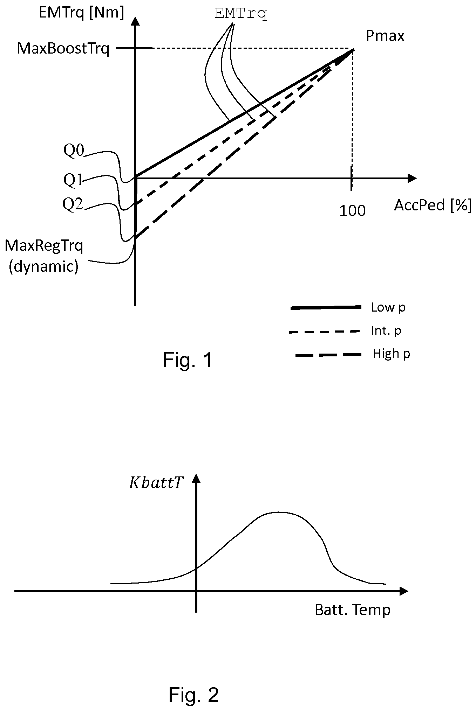

Figure 1 shows a diagram of a torque curve EMTrq, which is positive when the electric motor generator acts like a motor and negative when it acts like an electric generator. Said positive or negative torque is delivered by the electric motor generator as a function of a position of the accelerator pedal AccPed, also indicated in percentage terms with the symbol AccPed%, and as a function of the current momentum p of the vehicle: F(AccPed%, p).

The maximum positive deliverable torque is indicated in the figures with MaxBoostTrq. It is delivered when the accelerator pedal is completely lowered, namely when it reaches its maximum inclination.

Figure 1 shows different discrete torque delivery straight lines as a function of vehicle momentum thresholds.

The momentum p, as it is known, is given by the product of the speed s (Speed) of the vehicle by the mass m of the vehicle.

All straight lines have an end in the point Pmax with coordinates [100%, MaxBoostTrq].

The figure shows a plane in which the abscissa axis indicates an inclination of the accelerator pedal and the ordinate axis indicates a torque delivered or absorbed by the electric motor generator.

It is identified with a first point Pmax having coordinates

- complete lowering (100%) of the accelerator pedal and
- maximum positive torque (MaxBoostTrq) deliverable by the electric motor generator.

Each straight line identifies a second point Q having coordinates

- complete release (0%) of the accelerator pedal and
- Intersection with the ordinate axis, defining a zero Q0 or negative Q1, Q2, etc. intercept, wherein the module of said intercept is proportional to said actual momentum.

The intersection point of said torque curve EMTrq with the abscissa axis lies on the positive semi-straight line of the abscissa axis and moves towards increasing values proportionally to said actual momentum p of the vehicle, namely as the latter increases.

Therefore, the function F(AccPed%, p) is made discrete, by discretizing the current momentum, identifying the aforesaid bundle of straight lines going through said first point Pmax until intersecting said ordinate axis in the point Q (Q1, Q2, etc).

Hence, considering two distinct intervals of momentums, two straight lines can be obtained, one for each interval, which express the torque delivered/absorbed by the electric motor and have angular coefficients and respective known terms (intersections with the ordinate axis) that are different from one another.

Furthermore, the region corresponding to the coasting, namely EMTrq = 0, is absent for values of AccPed within a given interval and is present with one single value of AccPed, namely the point in which the straight line crosses the abscissa axis.

The mass of the vehicle can be considered substantially constant as long as the vehicle is moving. Every time the vehicle stops, goods or people can get into or out of the vehicle. Therefore, the mass of the vehicle must be recalculated or detected every time the vehicle stops.

According to a preferred variant of the invention, the mass of the vehicle must be calculated or acquired every time a door or the hood is opened. The conditions leading to a new vehicle mass calculation or acquisition procedure evidently need to be assessed case by case.

For example, a heavy vehicle or a pick-up truck can load or unload goods without having to open any door or hood. Furthermore, they can unload goods even when they are moving.

The mass of the vehicle can be acquired by means of sensors, for example load cells arranged in the suspensions.

The mass of the vehicle can be estimated in any way.

According to a preferred variant of the invention, the mass of the vehicle is obtained by means of a recursive least squares filter.

In particular, the filter is used to find the mass m expressed in kg starting from the first law of motion applied to the vehicle:

$$F = m * a$$

Wherein a represents the acceleration of the vehicle, expressed in m/s^2, and F represents the resultant of the forces acting upon the vehicle, expressed in N.

The components affecting the force are:

- Aerodynamics of the vehicle, which is known beforehand, wheel rolling friction and inner frictions, which can be represented by a second-degree polynomial: Ffr= C0 * m + C1 * v + C2 * v^2, wherein v is the speed of the vehicle and the coefficients C0, C1 and C2 are characteristic parameters of the vehicle.
- The force developed by the motor to push the vehicle Fen = k * Ten, wherein Ten represents the torque, expressed in Nm, developed by the electric motor and k is a coefficient for the conversion from electric torque to force applied to the vehicle. Said torque value Ten is generally communicated, through a vehicle CAN network, by the inverter.
- The force of gravity acting upon the vehicle along inclined paths: Fsl = m * g * sin($\alpha$) wherein g is the gravitational acceleration and $\alpha$ is the slope of the path relating to a surface which is perpendicular to the force of gravity.

Evidently, F = Fen - Ffr - Fsl.
By decomposing, the result is:

$$(k * Ten – C1*v – C2 * V^2) = m *( a + g*sin(\alpha) + C0)  (1)$$

If

$$A = (k * Ten – C1*v – C2 * V^2)$$

and
B = (a + g*sin($\alpha$) + C0), then the previous equation can be written as

$$A = m * B \hspace{8cm} (2)$$

Which is a linear equation, wherein the terms A and B change in time, during the travel of the vehicle, and are always known. Indeed, the vehicle inclination data, the vehicle speed data and the data concerning the torque applied to the electric motor are usually available in the vehicle CAN network.

The linear nature of the equation (2) allows us to estimate m through a recursive least squares algorithm. This algorithm estimates m by merging the data measured in different time instants. The need for these multiple measurements is due to the fact that the data of the sensors are extremely noisy. Furthermore, this allows us to filter external interferences, such as wind and road discontinuities.

The output of the filter is preferably initialized with the expected total mean mass of the vehicle, hereinafter referred to as mh, and a level of uncertainty is preferably set upon this initialization through the specification of the relating variance.

The measurements carried out by means of the vehicle sensors and falling within the equation (1) are preferably previously filtered with a moving average filter.

In order for to the invention to be easily understandable, the momentum of the vehicle is discretized and a straight line is identified within each momentum interval, according to figure 1.

The dynamics of the variation of the speed of the vehicle evidently are greater than the dynamics of the variation of the mass thereof and, therefore, the speed affects the dynamics of the momentum to a greater extent.

With reference to figure 1, three straight lines with a low momentum "Low p", an intermediate momentum "Int. P" and a high momentum "High p" are identified.

By using a very small momentum discretization, a very thick bundle of straight lines is generated, which reproduces an extremely soft behaviour of the electric motor generator.

**First example:**

Let's assume that we are dealing with a vehicle with a high momentum p, for example a full-load vehicle at 100 km/h, which means that the reference torque straight line is the straight line "High P" of figure 1, and that the accelerator pedal is released until exactly reaching the point of intersection of the torque straight line "High P" with the abscissa axis.

In this point, the motor is in coasting mode and, therefore, the vehicle slows down because the electric motor does not intervene in any manner and delivers a zero torque.

Assuming that the mass of the vehicle is constant, when the speed s of the vehicle goes below a predetermined threshold, which activates the aforesaid lower straight line, the diagram uses the intermediate straight line of figure 1. This implies that, even though the pedal has not been moved, the motor generator starts delivering a braking torque.

**Second example:**

Let's assume that the vehicle is driving at a high speed and with a full load and that the accelerator pedal is completely released.

The resisting torque generated by the electric motor generator drops proportionally to the speed of the vehicle, assuming that the mass remains constant, and said resisting torque tends to reach a zero value as the vehicle stops.

This strategy identifies a bundle of straight lines going through the point Pmax with coordinates (100; Max-BoostTrq) and the angular coefficient changes as a function of the current momentum p of the vehicle, namely the estimated or measured current mass multiplied by the measured current speed.

In particular, the angular coefficient increases proportionally to the momentum p of the vehicle. Therefore, the intersection of the straight line with the ordinate axis also changes proportionally to the momentum p of the vehicle.

According to the invention, the electric motor generator delivers a negative torque, whose module linearly depends on the momentum p of the vehicle and on the percentage of inclination of the accelerator pedal, within the interval, along the abscissa axis, ranging from the point of intersection of the torque straight line with the abscissa axis to zero.

The torque curve intersects the ordinate axis in the point Q, which, in relation to predetermined momentum p thresholds, assumes values Q0, Q1, Q2, etc. having a negative value, which are indicated in figure 1.

We would like to remind that the discretization of p was solely suggested for the purpose of a better understanding of the invention.

Indeed, the torque EMTrq and the point Q can be calculated in continuous manner, taking into account the sampling time of the control unit of the electric motor generator.

Q0 can have a zero value. This turns out to be particularly advantageous when the vehicle moves very slowly, in a column, along a slight slope.

Under these conditions, the momentum is low and no negative torque is delivered, as this would force the driver to press the accelerator pedal in order to move the vehicle. On the other hand, the low speed of the vehicle would not permit a significant recovery of useful energy.

The function identifying the torque curve EMTrq delivered/absorbed by the electric motor generator, according to the invention, evidently has a partial derivative, relating to the position of the accelerator pedal AccPed, which is continuous up to the intersection with the ordinate axis, namely up to the point of complete release of the accelerator. This means that there are no cusps or broken lines, as long as the values remain inside the same vehicle momentum p interval where said straight line is defined. Going from one momentum p interval to another, there is a shift between the straight lines shown in figure 1.

According to a preferred variant of the invention, the behaviour of the electric motor generator, which is schematically shown in figure 1, can be mathematically expressed by the following equation

$$EMtrq = p * AccPed\% + Q$$

and precisely:

$$\begin{cases} EMTrq = \dfrac{(MaxBoostTrq - MaxRegTrq) \cdot AccPed\%}{100} + MaxRegTrq \\ MaxRegTrq = MaxTrq \cdot f(p) \cdot Kbatt1(SOC, SOH) \cdot Kbatt2(battTemp) \end{cases}$$

wherein the angular coefficient depends on the percentage of inclination AccPed% of the accelerator pedal and on the dependent variable MaxRegTrq, which is a function of the momentum p of the vehicle.

The known term Q coincides with said dependent variable MaxRegTrq and similarly remains constant within contiguous vehicle momentum p intervals, thus obtaining the bundle of straight lines shown in figure 1.

In particular, MaxRegTrq is given by the product of a function f(p) - having a value ranging from 0 to 1 - and MaxTrq. The symbol f(p) indicates "function of the momentum".

MaxTrq is negative, generally depends on the characteristics of the inverter associated with the electric motor generator to manage the transfer of energy from and to the vehicle storage batteries and represents, in mechanical terms, a maximum braking torque value deliverable by the electric motor generator.

To point out that MaxRegTrq is a variable parameter, in figure 1 it is indicated as dynamic.

Indeed, it varies as a function of the current speed of the vehicle (assuming that the mass is constant), identifying the moduli of the points Q0, Q1, Q2, etc..

Preferably, this dependant variable MaxRegTrq can also be a function of other factors, such as KbattS and KbattT, thus obtaining a function of three or more variables. Both KbattS and KbattT can have a value ranging from 0 to 1 and relate to the characteristics of the vehicle batteries connected to the electric motor generator through the inverter.

The first one represents a function of the state of charge SOC and of the state of health SOH, in particular KbattS = SOC*SOH/10^4. The second one represents a corrective factor, which is a function of the temperature of the batteries.

These corrective factors KbattS and KbattT are generally provided by the suppliers of the vehicle batteries.

Figure 2 shows a development of the parameter KbattT, which is a function of the temperature of the battery pack that is operatively connected to the electric motor generator.

It has a value ranging from 0 to 1 with a non-linear development, which identifies a concavity facing downward and a peak in the first quadrant of the Cartesian plane of figure 2.

According to figure 1, the momentums p of a hybrid/electric vehicle are preferably divided into three intervals characterized by a low momentum (Low p), which includes a zero momentum of the vehicle, a intermediate momentum (Int. p) and a high momentum (High p), which includes the maximum momentum that can be reached by the vehicle, namely the maximum full-load speed.

This method can preferably be implemented by the vehicle management unit VMU, which is interfaced with the vehicle control unit VCU.

In some circumstances the two units are integrated in one single processing unit.

The value of MaxRegTrq can depend on the characteristics of the electric motor generator or it can be set application by application.

This invention can be advantageously implemented by means of a computer program comprising coding means for carrying out one or more steps of the method, when the program is run on a computer. Therefore, the scope of protection is extended to said computer program and, furthermore, to means that can be read by a computer and comprise a recorded message, said means that can be read by a computer comprising program coding means for carrying out one or more steps of the method, when the program is run on a computer.

**Claims**

1. A method for controlling the propulsion of a vehicle comprising an electric motogenerator and an accelerator pedal and a relating sensor connected thereto for detecting an inclination of the accelerator pedal, wherein a torque curve (EMTrq) delivered/absorbed by the electric motogenerator is a function (F(AccPed%, p)) of two variables, wherein a first variable coincides with said inclination of said accelerator pedal and a second variable coincides with an actual momentum (p) of the hybrid vehicle, wherein said torque curve has a partial derivative, in respect to said inclination of the accelerator pedal (AccPed%), linear in a relating entire domain (0% - 100%) and said domain is continuous between a condition of complete release (0%) of the accelerator pedal and a condition of total lowering (100%) of the accelerator pedal.

2. The method according to claim 1, wherein a plane inclination(pedal)/torque(electric motogenerator) is identified,

    - a first point (Pmax) having coordinates

        • total lowering (100%) and
        • maximum positive torque (MaxBoostTrq) deliverable by the electric motogenerator,

    - a second point (Q) having coordinates

        • complete release (0%) of the accelerator pedal and
        • intersection with the axis of the ordinates, defining a zero (Q0) or negative (Q1, Q2) intercept,
        wherein an absolute value of said intercept is proportional to said actual momentum.

3. The method according to claim 2, wherein an intersection point of said torque curve (EMTrq) with the axis of the abscissas lies on the positive semi-straight line of the axis of the abscissas and moves towards increasing values proportionally to said actual momentum (p) of the vehicle.

**4.** The method according to claims 2 or 3, wherein said function (F(AccPed%, p)) is made discrete, by the discretization of said actual momentum, identifying a straight-line bundle passing through said first point (Pmax) until intersecting said axis of the ordinates.

**5.** The method according to any one of the preceding claims, wherein said torque curve defines a partial function in respect to said accelerator pedal having an angular coefficient greater than zero and known terms (Q) smaller than/or equal to 0 the respective modules being proportional to said actual momentum (p) of the hybrid vehicle.

**6.** The method according to any one of the preceding claims wherein said torque curve EMTrq

$$\begin{cases} EMTrq = \dfrac{(MaxBoostTrq - MaxRegTrq) \cdot AccPed\%}{100} + MaxRegTrq \\ MaxRegTrq = MaxTrq \cdot f(p) \end{cases}$$

is given by the summation of;

- a first quantity given by the product of a value corresponding to said inclination of the accelerator pedal AccPed% multiplied by a difference between a value of maximum torque MaxBoostTrq deliverable by the electric motogenerator less than a first parameter MaxRegTrq;
- a second quantity coincident with said first parameter MaxRegTrq,

wherein said first parameter MaxRegTrq is a function of at least said actual momentum p of the vehicle.

**7.** The method according to claim 6, wherein said first parameter MaxRegTrq is equal to a function f(p) of said momentum p of the vehicle, said function f(p) having a value ranging between 0 and 1 multiplied by a second parameter MaxTrq, wherein said second parameter MaxTrq is negative and depends on characteristics of an inverter associated to the electric motogenerator for managing the energy transfer from and to the vehicular battery pack.

**8.** The method according to the claim 6 or 7, wherein said first parameter MaxRegTrq is equal to a function f(p) of said momentum p of the vehicle, having a value ranging between 0 and 1, multiplied by a third KbattS and/or a fourth KbattS parameter, both ranging between 0 and 1 wherein said third parameter is a function of the state of charge (SOC) and of a state of health (SOH) of said vehicular batteries and wherein said fourth parameter is a function of a temperature of said vehicular battery packs.

**9.** A processing unit for controlling an electric motogenerator of a hybrid vehicle configured to carry out the subject method of any one of the claims from 1 to 8.

**10.** A vehicle comprising a transmission, an internal combustion engine and an electric motogenerator connected to said transmission and furthermore comprising a processing unit according to claim 9.

**Patentansprüche**

**1.** Verfahren zur Steuerung des Antriebs eines Fahrzeugs, umfassend einen elektrischen Motorgenerator und ein Gaspedal und einen damit verbundenen Sensor zum Erfassen einer Neigung des Gaspedals, wobei eine Drehmomentkurve (EMTrq), die von dem elektrischen Motorgenerator abgegeben/absorbiert wird, eine Funktion (F(AccPed%, p)) von zwei Variablen ist, wobei eine erste Variable mit der Neigung des Gaspedals übereinstimmt und eine zweite Variable mit einem tatsächlichen Impuls (p) des Hybridfahrzeugs übereinstimmt, wobei die Drehmomentkurve eine partielle Ableitung in Bezug auf die Neigung des Gaspedals (AccPed%) aufweist, die in einem zugehörigen gesamten Bereich (0% - 100%) linear ist, und der Bereich zwischen einem Zustand der vollständigen Freigabe (0%) des Gaspedals und einem Zustand der maximalen Absenkung (100%) des Gaspedals stetig ist.

**2.** Verfahren nach Anspruch 1, wobei eine ebene Neigung (des Pedals)/ein ebenes Drehmoment (des Motorgenerators) bestimmt wird,

- ein erster Punkt (Pmax) mit Koordinaten

• der maximalen Absenkung (100%) und
• des maximalen positiven Drehmoments (MaxBoostTrq), das durch den elektrischen Motogenerator abgegeben werden kann,

- ein zweiter Punkt (Q) mit Koordinaten

• der vollständigen Freigabe (0%) des Gaspedals und
• des Schnittpunkts mit der Achse der Ordinaten, der einen Nullpunkt (Q0) oder negativen (Q1, Q2) Streckenabschnitt definiert,
wobei ein absoluter Wert des Streckenabschnitts proportional zum tatsächlichen Impuls ist.

3. Verfahren nach Anspruch 2, wobei ein Schnittpunkt der Drehmomentkurve (EMTrq) mit der Abszissenachse auf der positiven Halbgeraden der Abszissenachse liegt und sich proportional zum tatsächlichen Impuls (p) des Fahrzeugs in Richtung zunehmender Werte verschiebt.

4. Verfahren nach einem der Ansprüche 2 oder 3, wobei die Funktion (F(AccPed%, p)) durch die Diskretisierung des tatsächlichen Impulses diskretisiert wird, wobei ein Geradenbündel identifiziert wird, das durch den ersten Punkt (Pmax) verläuft, bis es die Achse der Ordinaten schneidet.

5. Verfahren nach einem der vorstehenden Ansprüche, wobei die Drehmomentkurve eine Teilfunktion in Bezug auf das Gaspedal definiert, die einen Winkelkoeffizienten größer als Null und bekannte Terme (Q) kleiner als/oder gleich 0 aufweist, wobei die jeweiligen Module proportional zu dem tatsächlichen Drehmoment (p) des Hybridfahrzeugs sind.

6. Verfahren nach einem der vorstehenden Ansprüche, wobei die Drehmomentkurve EMTrq

$$
\begin{cases}
EMTrq = \dfrac{(MaxBoostTrq - MaxRegTrq) \cdot AccPed\%}{100} + MaxRegTrq \\
MaxRegTrq = MaxTrq \cdot f(p)
\end{cases}
$$

durch die Summierung von:

- einer ersten Größe, gegeben durch das Produkt eines Wertes, welcher der Neigung des Gaspedals AccPed% entspricht, multipliziert mit einer Differenz zwischen einem Wert des maximalen Drehmoments MaxBoostTrq, welcher durch den elektrischen Motorgenerator abgegeben werden kann, und einem ersten Parameter Max-RegTrq;
- einer zweiten Größe, übereinstimmend mit dem ersten Parameter MaxReqTrq, gegeben ist,

wobei der erste Parameter MaxReqTrq eine Funktion mindestens des tatsächlichen Drehmoments p des Fahrzeugs ist.

7. Verfahren nach Anspruch 6, wobei der erste Parameter MaxRegTrq gleich einer Funktion f(p) des Impulses p des Fahrzeugs ist, wobei die Funktion f(p) einen Wert im Bereich zwischen 0 und 1 multipliziert mit einem zweiten Parameter MaxTrq hat, wobei der zweite Parameter MaxTrq negativ ist und von den Eigenschaften eines Wechselrichters abhängt, der mit dem elektrischen Motogenerator verbunden ist, um die Energieübertragung von und zu der Fahrzeugbatteriepackung zu steuern.

8. Verfahren nach einem der Ansprüche 6 oder 7, wobei der erste Parameter MaxRegTrq gleich einer Funktion f(p) des Impulses p des Fahrzeugs ist, mit einem Wert im Bereich zwischen 0 und 1, multipliziert mit einem dritten Parameter KbattS und/oder einem vierten Parameter KbattS, die beide zwischen 0 und 1 liegen, wobei der dritte Parameter eine Funktion des Ladezustands (SOC) und eines Gesundheitszustands (SOH) der Fahrzeugbatterien ist und wobei der vierte Parameter eine Funktion einer Temperatur der Fahrzeugbatteriepackung ist.

9. Eine Verarbeitungseinheit zur Steuerung eines elektrischen Motogenerators eines Hybridfahrzeugs, ausgeführt, um den Gegenstand des Verfahrens nach einem der Ansprüche 1 bis 8 auszuführen.

**10.** Ein Fahrzeug, umfassend ein Getriebe, einen Verbrennungsmotor und einen elektrischen Motorgenerator, der mit dem Getriebe verbunden ist und welches weiter eine Verarbeitungseinheit nach Anspruch 9 umfasst.

**Revendications**

**1.** Procédé pour commander la propulsion d'un véhicule comprenant un moteur-générateur électrique et une pédale d'accélérateur et un capteur apparenté connecté à celle-ci pour détecter une inclinaison de la pédale d'accélérateur, dans lequel une courbe de couple (EMTrq) distribué/absorbé par le moteur-générateur électrique est une fonction (F(AccPed%, p)) de deux variables, dans lequel une première variable coïncide avec ladite inclinaison de ladite pédale d'accélérateur et une seconde variable coïncide avec une quantité de mouvement réelle (p) du véhicule hybride, dans lequel ladite courbe de couple présente une dérivée partielle, par rapport à ladite inclinaison de la pédale d'accélérateur (AccPed%), linéaire dans un domaine entier apparenté (0 %-100 %) et ledit domaine est continu entre un état de relâchement complet (0 %) de la pédale d'accélérateur et un état d'abaissement total (100 %) de la pédale d'accélérateur.

**2.** Procédé selon la revendication 1, dans lequel une inclinaison de plan (pédale)/couple (moteur-générateur électrique) est identifiée,

- un premier point (Pmax) ayant des coordonnées

• abaissement total (100 %) et
• couple positif maximum (MaxBoostTrq) pouvant être distribué par le moteur-générateur électrique,

- un second point (Q) ayant des coordonnées

• relâchement complet (0 %) de la pédale d'accélérateur et
• intersection avec l'axe des ordonnées, définissant une interception nulle (Q0) ou négative (Q1, Q2), dans lequel une valeur absolue de ladite interception est proportionnelle à ladite quantité de mouvement réelle.

**3.** Procédé selon la revendication 2, dans lequel un point d'intersection de ladite courbe de couple (EMTrq) avec l'axe des abscisses se trouve sur la ligne demi-droite positive de l'axe des abscisses et se déplace vers des valeurs croissantes proportionnellement à ladite quantité de mouvement réelle (p) du véhicule.

**4.** Procédé selon les revendications 2 ou 3, dans lequel ladite fonction (F(AccPed%, p)) est faite discrète, par la discrétisation de ladite quantité de mouvement réelle, identifiant un paquet de lignes droites traversant ledit premier point (Pmax) jusqu'à l'intersection dudit axe des ordonnées.

**5.** Procédé selon l'une quelconque des revendications précédentes, dans lequel ladite courbe de couple définit une fonction partielle par rapport à ladite pédale d'accélérateur ayant un coefficient angulaire supérieur à zéro et des termes connus (Q) inférieurs ou égaux à 0, les modules respectifs étant proportionnels à ladite quantité de mouvement réelle (p) du véhicule hybride.

**6.** Procédé selon l'une quelconque des revendications précédentes dans lequel ladite courbe de couple EMTrq

$$\begin{cases} EMTrq = \dfrac{(MaxBoostTrq - MaxRegTrq) \cdot AccPed\%}{100} + MaxRegTrq \\ MaxRegTrq = MaxTrq \cdot f(p) \end{cases}$$

est donnée par la somme de ;

- une première quantité donnée par le produit d'une valeur correspondant à ladite inclinaison de la pédale d'accélérateur AccPed% multiplié par une différence entre une valeur de couple maximum MaxBoostTrq pouvant être distribué par le moteur-générateur électrique moins qu'un premier paramètre MaxRegTrq ;
- une seconde quantité qui coïncide avec ledit premier paramètre MaxRegTrq,

dans lequel ledit premier paramètre MaxRegTrq est une fonction d'au moins ladite quantité de mouvement réelle p du véhicule.

7. Procédé selon la revendication 6, dans lequel ledit premier paramètre MaxRegTrq est égal à une fonction f(p) de ladite quantité de mouvement p du véhicule, ladite fonction f(p) ayant une valeur comprise dans la plage entre 0 et 1 multipliée par un deuxième paramètre MaxTrq, dans lequel ledit deuxième paramètre MaxTrq est négatif et dépend de caractéristiques d'un onduleur associé au moteur-générateur électrique pour gérer le transfert d'énergie depuis et vers le bloc-batterie du véhicule.

8. Procédé selon la revendication 6 ou 7, dans lequel ledit premier paramètre MaxRegTrq est égal à une fonction f(p) de ladite quantité de mouvement p du véhicule, ayant une valeur comprise dans la plage entre 0 et 1, multipliée par un troisième paramètre KbattS et/ou un quatrième paramètre KbattS, tous les deux compris dans la plage entre 0 et 1 dans lequel ledit troisième paramètre est une fonction de l'état de charge (SOC) et d'un état de santé (SOH) desdites batteries du véhicule et dans lequel ledit quatrième paramètre est une fonction d'une température desdits blocs-batteries du véhicule.

9. Unité de traitement pour commander un moteur-générateur électrique d'un véhicule hybride configuré pour réaliser le procédé sujet selon l'une quelconque des revendications 1 à 8.

10. Véhicule comprenant une transmission, un moteur à combustion interne et un moteur-générateur électrique connecté à ladite transmission et comprenant en outre une unité de traitement selon la revendication 9.

Fig. 1

Fig. 2

**EP 3 527 455 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002183161 A1
- US 2012130572 A1
- US 2006287798 A1
- EP 2907686 A1
- US 2016059703 A1
- US 2016129809 A1